# EUROPÄISCHE PATENTANMELDUNG

(11) **EP 0 670 458 A1**
(43) Veröffentlichungstag der Anmeldung: **06.09.1995**
(21) Anmeldenummer: 94103090.0
(22) Anmeldetag: 02.03.1994
(51) Int. Cl.: F24F 6/14, B23K 26/00

(54) **Luftbefeuchter**

(71) Anmelder: LTG LUFTTECHNISCHE GMBH, D-70435 Stuttgart (DE)
(72) Erfinder: Wenger, Paul, Dipl.-Ing., D-71254 Ditzingen (DE)
(74) Vertreter: Grosse, Rainer, Dipl.-Ing.

(57) **Zusammenfassung**

Die Erfindung betrifft einen Luftbefeuchter einer lufttechnischen Anlage, insbesondere einer Belüftungs- oder Klimaanlage, mit einer Befeuchtungseinrichtung, die eine Flüssigkeitsverdüsungseinrichtung (insbesondere Wasserverdüsungseinrichtung) aufweist und von einem zu befeuchtenden Luftstrom durchsetzt wird, wobei die Flüssigkeitsverdüsungseinrichtung mindestens eine Düsenbohrung aufweist, der Flüssigkeit unter Druck zugeführt wird. Es ist vorgesehen, daß die Düsenbohrung (10) direkt in ein flüssigkeitzuführendes Element (23) mittels Laserstrahlbearbeitung eingebracht angeordnet ist.

## Beschreibung

Die Erfindung betrifft einen Luftbefeuchter einer lufttechnischen Anlage, insbesondere einer Belüftungs- oder Klimaanlage, mit einer Befeuchtungseinrichtung, die eine Flüssigkeitsverdüsungseinrichtung (insbesondere Wasserverdüsungseinrichtung) aufweist und von einem zu befeuchtenden Luftstrom durchsetzt wird, wobei die Flüssigkeitsverdüsungseinrichtung mindestens eine Düsenbohrung aufweist, der Flüssigkeit unter Druck Zugeführt wird.

Es ist bekannt, beispielsweise in Belüftungs- oder Klimaanlagen Luftbefeuchter der vorstehend genannten Art einzusetzen. Diese Luftbefeuchter werden auch als "Wascher" bezeichnet. Die Funktionsweise einer derartigen lufttechnischen Anlage ist prinzipiell folgende: Mittels einer Luftförderanlage (beispielsweise einem Ventilator) wird ein Luftstrom durch eine Befeuchtungseinrichtung des Luftbefeuchters hindurchgeführt. Dies erfolgt vorzugsweise in einer Kammer des Luftbefeuchters. Die Befeuchtungseinrichtung weist ein Rohrsystem auf, daß mit im Abstand zueinander angeordneten Adaptern versehen ist. An den Adaptern sind Sprühdüsen befestigt. Diese werden vorzugsweise mit den Adaptern verschraubt. Über das Rohrsystem wird den einzelnen Sprühdüsen Flüssigkeit, insbesondere aufbereitetes Wasser, unter Druck zugeführt, so daß dieses aus den Düsenbohrungen der Sprühdüsen austreten kann. Dieses Verdüsen kann in und/oder entgegen der Luftströmungsrichtung sowie quer dazu erfolgen. Die durch das Verdüsen entstehenden Wassertröpfchen werden vom Luftstrom mitgenommen und verdunsten dabei ganz oder teilweise. Die Geschwindigkeit der Verdunstung hängt von der Größe der Tropfen und der Relativgeschwindigkeit zwischen Wassertropfen und Luft und auch noch von weiteren Parametern ab. Der Feuchtigkeitsübergang läßt sich auf relativ kleinem Raum dadurch erzielen, daß der aus der entsprechenden Sprühdüse austretende Feuchtigkeitsstrahl gegen einen festen Prallstift oder eine ortsfeste Prallplatte tritt. Diese bekannte Einrichtung besteht aus einer Vielzahl von Einzelteilen und erfordert im-Hinblick auf die hohen Sprühdrücke verschleißfeste Materialien für die Sprühdüsen. Da das Rohrleitungsnetz zunächst mit den Adaptern versehen werden muß, die wiederum die Sprühdüsen aufnehmen, welche insbesondere mittels eines Außengewindes in ein Innengewinde der Adapter eingeschraubt werden, liegt eine aufwendige Konstruktion vor, die umfangreiche Montagearbeiten erfordert. Insgesamt sind für die bekannten Luftbefeuchter daher relativ große Investitionen notwendig.

Der Erfindung liegt daher die Aufgabe zugrunde, einen Luftbefeuchter der eingangs genannten Art zu schaffen, der besonders einfach aufgebaut ist und nur geringe Montagearbeiten erfordert.

Diese Aufgabe wird erfindungsgemäß dadurch gelöst, daß die Düsenbohrung direkt in ein flüssigkeitzuführendes Element mittels Laserstrahlbearbeitung eingebracht angeordnet ist. Aufgrund der erfindungsgemäßen Ausgestaltung ist es nicht erforderlich, das Flüssigkeit zuführende System zunächst mit Adaptern zu versehen, die dann wiederum die Sprühdüsen aufnehmen. Vielmehr wird direkt in das Flüssigkeit zuführende System, nämlich in mindestens ein flüssigkeitzuführendes Element mindestens eine Bohrung eingebracht, aus der die Flüssigkeitsversprühung in die vom Luftstrom durchsetzte Kammer des Luftbefeuchters erfolgt. Separate Sprühdüsen und/oder Adapter sind daher -wie erwähnt- nicht erforderlich. Die Düsenbohrung wird erfindungsgemäß mittels Laserstrahlbearbeitung erzeugt. Dies führt zu einem sehr genauen Bohrungsdurchmesser, kreisrunder Ausbildung (sofern erwünscht) und insbesondere zu einer Oberflächenveränderung der Wandung der Düsenbohrung. Diese Oberflächenveränderung - insbesondere Härtung- stellt sich aufgrund der Wärmebehandlung mit dem Laserstrahl ein und führt dazu, daß eine verschleißhemmende, relativ widerstandsfähige Schicht entsteht. Besondere Materialien, wie sie im Stand der Technik für die Sprühdüsen verwendet werden müssen, brauchen daher nicht eingesetzt zu werden, um die notwendige Verschleißfestigkeit zu erzielen. Während im Stand der Technik die Düsenbohrung spanabhebend erstellt wird, was nicht zu einer Oberflächenveränderung des Materials führt, erfolgt dies beim Gegenstand der Erfindung auf wesentlich einfachere Art mittels des Laserstrahls, wobei zusätzlich die Verschleißfestigkeit erzielt wird. Insgesamt ergibt sich eine nur aus wenigen Einzelteilen bestehende Einrichtung, die im wesentlichen bereits bei der Herstellung ihren einsatzbereiten Zustand erhält. Montagearbeiten, wie die Anordnung und Abdichtung beziehungsweise Befestigung von Adaptern, sowie die Montage von Sprühdüsen sind nicht erforderlich. Die Bezeichnung "Düsenbohrung" ist im Zuge dieser Anmeldung derart zu verstehen, daß sie mittels Laserstrahlbearbeitung, also nicht durch einen konventionellen Bohrvorgang, in das flüssigkeitzuführende Element eingebracht ist. Es liegt also -wie gesagtkeine spanabhebende Bearbeitung wie bei einem Bohrvorgang mit einem Spiralbohrer vor.

Nach einer Weiterbildung der Erfindung ist vorgesehen, daß das flüssigkeitzuführende Element ein Rohr ist, dessen Rohrwandung von der Düsenbohrung durchsetzt wird. Vorzugsweise sind mehrere, mit Düsenbohrungen versehene Rohre vorgesehen, so daß insgesamt ein Sprühsystem gebildet wird. Die Verteilung der Düsenbohrungen über die Rohre wird in Abhängigkeit von der jeweils gewünschten Verdüsungsrate, Flüssigkeitsverteilung usw. vorgenommen.

Vorzugsweise bilden die einzelnen Rohre ein Rohrleitungsnetz. In dieses Rohrleitungsnetz wird die zu versprühende Flüssigkeit unter Druck mittels einer geeigneten Einrichtung (zum Beispiel mittels einer Pumpe) eingespeist.

Nach einer Weiterbildung der Erfindung ist vorgesehen, daß der Laserstrahl und/oder das Material des flüssigkeitzuführenden Elements derart gewählt ist/sind, daß -wie vorstehend bereits erwähnt- bei dem Herstellen der Düsenbohrung deren Bohrungswandung eine verschleißhemmende Oberfläche erhält. Der Laserstrahl kann dabei im Hinblick auf seine Temperatur, sein Durchmesser, seine Leistung, seine Wellenlänge usw. ausgewählt werden, um ein optimales Ergebnis zu erzielen.

Vorzugsweise ist vorgesehen, daß direkt an dem flüssigkeitzuführenden Element eine Pralleinrichtung für den aus der Düsenbohrung austretenden Flüssigkeitsstrahl befestigt ist. Damit dient das flüssigkeitzuführende Element nicht nur der Zuführung der zu versprühenden Flüssigkeit sowie als Träger der Düsenbohrung, sondern auch noch als Befestigungsgrundlage für die Pralleinrichtung. Damit liegt eine Mehrfachfunktion vor. Die Pralleinrichtung ist vorzugsweise verstellbar angeordnet. Dies bedeutet, daß ihre Lage im Hinblick auf die jeweils relevante Düsenbohrung verändert werden kann, beispielsweise läßt sich der Abstand zur Düsenbohrung und auch die Fluchtungsposition zu dieser verändern. Auf diese Art und Weise kann der Befeuchtungswirkungsgrad beeinflußt werden, dies insbesondere um eine Einstellung/Regelung der relativen Feuchte zu realisieren. Anstelle der Regelung kann auch eine Steuerung vorgesehen sein.

Vorzugsweise ist die Pralleinrichtung auf das flüssigkeitzuführende Element, insbesondere auf das Rohr, aufgeklipst. Diese Befestigungsart ermöglicht eine einfache Montage. Die Pralleinrichtung weist vorzugsweise Klipsarme auf, die zumindest einen Teilumfang des Rohres im Klemmsitz umgreifen. Für die Montage der Pralleinrichtung ist es lediglich erforderlich, diese in Richtung auf das Rohr zu bewegen, wodurch die Klipsarme aufgeweitet werden. Nach Überwindung des größten Druchmessers des Rohres bewegen sich die Klipsarme wieder aufeinander zu und halten die Prallvorrichtung im Klemmsitz fest.

Eine besonders einfache Bauform liegt vor, wenn die Pralleinrichtung aus einem vorzugsweise einstückigen Blechteil besteht. Dieses Blechteil ist vorzugsweise als Stanz-Biege-Teil ausgebildet. Es wird aus einer Blechtafel gestanzt und -zur Ausbildung der Klipsarme usw.- entsprechend gebogen. Vorzugsweise weist es einen insbesondere hakenförmigen Fortsatz auf, dessen vorderes Ende in Richtung auf die Düsenbohrung weist. Der austretende Flüssigkeitsstrahl trifft somit auf diesen vorderen Bereich und wird durch den Aufprall zerstäubt.

Durch die einstückige Ausbildung der Pralleinrichtung ergibt sich eine besonders preisgünstige Bauform.

Das flüssigkeitzuführende Element besteht vorzugsweise aus Stahl, insbesondere aus Edelstahl. Dieser Werkstoff hat neben der Korrosionsbeständigkeit die Eigenschaft, aufgrund der Laserstrahl-Bearbeitung die verschleißhemmende Schicht auszubilden.

Besonders gute Befeuchtungsergebnisse lassen sich erzielen, wenn der Durchmesser der Düsenbohrung im Bereich von 0,01 bis 0,3mm, insbesondere 0,05mm, liegt.

Die Flüssigkeitszerstäubung erfolgt vorzugsweise mittels Hochdruck, der in einem Bereich von etwa 15 bis 300 bar liegen kann.

Die Zeichnungen veranschaulichen die Erfindung anhand eines Ausführungsbeispiels und zwar zeigt:
- Figur 1: einen Luftbefeuchter mit als Rohrleitungsnetz angeordneten Rohren,
- Figur 2: eine Seitenansicht (teilweise im Schnitt) auf einen Abschnitt eines Rohres, der mit einer Düsenbohrung sowie einer Pralleinrichtung versehen ist und
- Figur 3: eine Stirnansicht auf die Einrichtung gemäß Figur 2.

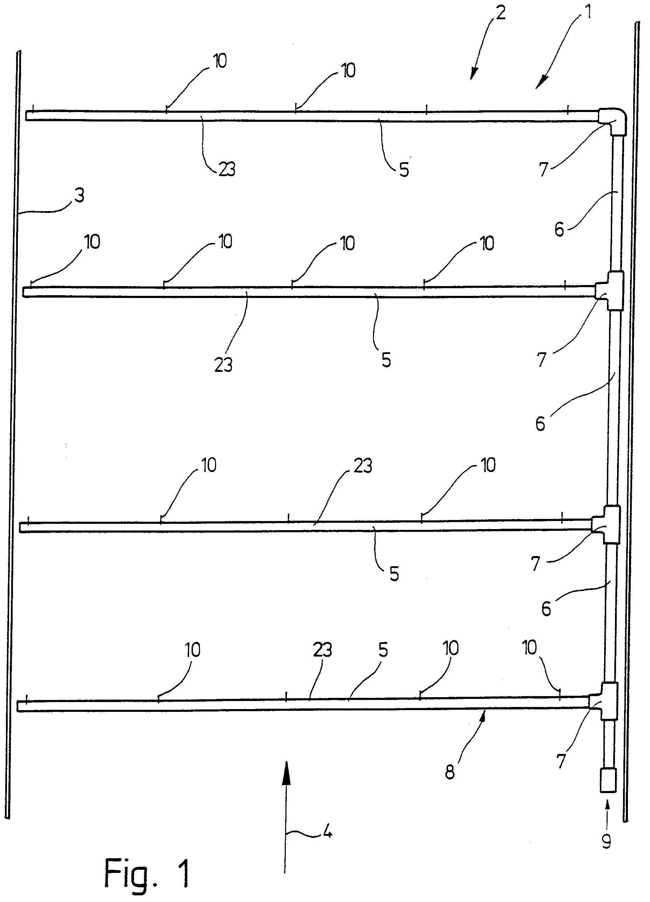

Die Figur 1 zeigt -in schematischer Darstellungeinen Luftbefeuchter 1 einer -nicht näher dargestellten- lufttechnisohen Anlage. Bei der lufttechnischen Anlage kann es sich bespielsweise um eine Belüftungs- oder Klimaanlage handeln. Der Luftbefeuchter 1 besitzt eine Flüssigkeitsverdüsungseinrichtung 2, die in einer Kammer 3 (Luftführungskanal) angeordnet ist. Der Kammer 3 wird ein zu befeuchtender Luftstrom (Pfeil 4) zugeleitet. Dem Luftstrom wird beim Passieren der Kammer 3 Flüssigkeit, insbesondere aufbereitetes Wasser, zugeführt. Dies erfolgt durch Verdüsung des Wassers mittels der Flüssigkeitsverdüsungseinrichtung 2.

Die Flüssigkeitsverdüsungseinrichtung 2 weist flüssigkeitszuführende Elemente 23, nämlich Rohre 5 auf, die über Verbindungsrohre 6 und geeignete Verbindungselemte 7 zu einem Rohrleitungsnetz 8 zusammengesetzt sind. Dem Rohrleitungsnetz 8 wird zu zerstäubendes Wasser mittels einer nicht dargestellten Pumpe unter Hochdruck zugeführt (Pfeil 9).

Die Rohre 5 weisen Düsenbohrungen 10 auf, die -aus Gründen der Darstellung- in der Figur 1 lediglich als Striche angedeutet sind. Bei den Düsenbohrungen 10 handelt es sich um die jeweilige Rohrwandung 11 durchsetzende Kanäle mit prismatischem oder zylindrischem Querschnitt. Diese Kanäle sind derart über die Länge der Rohre 5 beabstandet zueinander verteilt angeordnet, daß sich eine gewünschte Sprühnebelverteilung in der Kammer 3 einstellt. Es ist hierzu nicht -wie in Figur 1 angegeben- erforderlich, daß sich die Düsenbohrungen 10 in Richtung des Luftstromes orientieren, sondern sie können natürlich auch entgegen und/oder auch quer zum Luftstrom verlaufen, was jeweils zu entsprechenden Relativgeschwindigkeiten zwischen dem austretenden Wasserstrahl und dem Luftstrom führt.

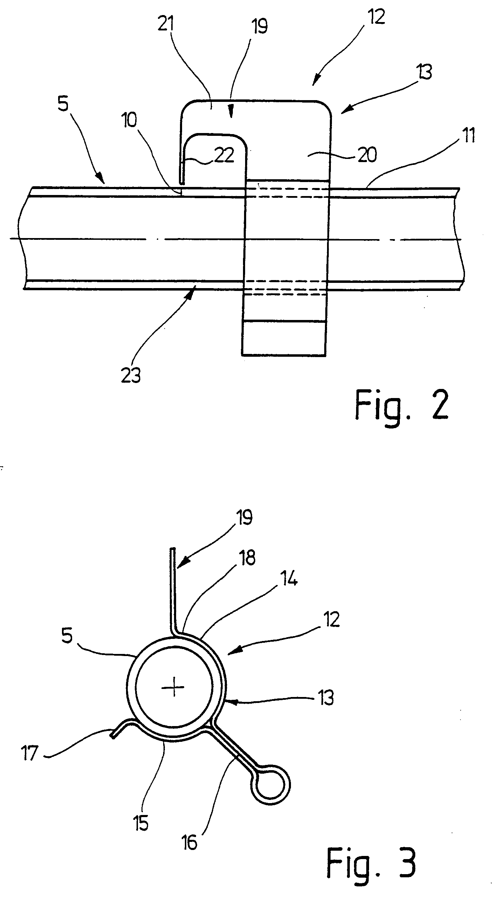

Die Figur 2 zeigt einen Abschnitt eines Rohres 5. Deutlich ist erkennbar, daß die Rohrwandung 11 von einer Düsenbohrung 10 durchsetzt ist. Diese Düsenbohrung 10 ist mittels eines Laserstrahls derart erzeugt, daß die Bohrungswandung aufgrund der Laserbehandlung eine verschleißhemmende, harte Schicht ausbildet. Kavitationserscheinungen aufgrund des mit hohem Druck austretenden Wasserstrahls sind dadurch weitestgehend vermieden.

Der Durchmesser der Düsenbohrung ist vorzugsweise größer als 0,05mm.

Nach einem bevorzugten Ausführungsbeispiel der Erfindung kann vorgesehen sein, daß die Flüssigkeitsverdüsungseinrichtung 2 Pralleinrichtungen 12 aufweist, wobei jeder Düsenbohrung 10 oder zumindest einigen Düsenbohrungen 10 eine derartige Pralleinrichtung 12 zugeordnet ist. Alternativ ist es jedoch auch möglich, keine Pralleinrichtungen 12 vorzusehen, wenn für die Ausbildung der Flüssigkeitsverdüsungseinrichtung 2 hinreichend Raum zur Verfügung steht. Der aus der jeweiligen Düsenbohrung 10 austretende Wasserstrahl zerplatzt nach längerer Wegstrecke (ca. 0,5 bis 2m in ruhender Luft) und bildet dadurch feinen Nebel. Wird eine Pralleinrichtung 12 eingesetzt, so erfolgt die Nebelbildung auf wesentlich kürzerer Wegstrecke dadurch, daß der Wasserstrahl auf ein Prallelement der Pralleinrichtung trifft und hierdurch in Nebel zerstäubt.

Gemäß der Figuren 2 und 3 besteht die dort gezeigte Pralleinrichtung 12 aus einem Stanz-Biege-Teil 13. Dieses Teil wird aus einem Blech ausgestanzt und dann in die gewünschte Form gebogen. Es weist zwei Klipsarme 14 und 15 auf, die der Außenkontur des Rohres 5 angepaßt sind. Die Klipsarme 14, 15 sind einstückig über einen haarnadelförmigen Federabschnitt 16 verbunden. Der freie Endbereich 17 des Klipsarms 15 ist radial nach außen abgebogen. Der Endbereich 18 des Klipsarms 14 geht in einen hakenförmigen Abschnitt 19 über, der von einem radial nach außen führenden Bereich 20, einem sich daran einstückig anschließenden, etwa Parallel zur Längsachse des Rohres 5 verlaufenden Bereich 21 sowie einem sich einstückig daran anschließenden Endabschnitt 22 gebildet ist. Der Endabschnitt 22 verläuft radial auf die Düsenbohrung 10 zu und endet vor dieser mit geringem Abstand. Der Abstand beträgt vorzugsweise 0,5mm. Vorzugsweise weist der Endabschnitt 22 eine quadratische Querschnittsform von etwa 0,5mm Kantenlänge auf.

Aus der vorstehenden Beschreibung ist ersichtlich, daß die Pralleinrichtung 12 einstückig aus Blech hergestellt ist. Sie läßt sich durch radiales Aufschieben auf das Rohr 5 im Klemmsitz festklipsen, wobei aufgrund dieses Klemmsitzes ihre relative Lage zur Düsenbohrung 10 einstellbar ist. Durch Veränderung der Lage kann der Befeuchtungswirkungsgrad des erfindungsgemäßen Luftbefeuchters 1 eingestellt werden. Der Endabschnitt 22 bildet einen Prallstift für den austretenden Wasserstrahl. Nach anderen, nicht dargestellten Ausführungsbeispielen ist es selbstverständlich auch möglich, anstelle des Prallstiftes eine Prallplatte oder dergleichen vorzusehen. Nach einem weiteren Ausführungsbeispiel ist es auch möglich, anstelle eines Klipses einen Befestigungsring vorzusehen, der an dem Rohr mittels einer geeigneten Einrichtung (zum Beispiel einer Spannschraube) in der gewünschten Stellung befestigbar ist.

## Patentansprüche

1. Luftbefeuchter einer lufttechnischen Anlage, insbesondere einer Belüftungs- oder Klimaanlage, mit einer Befeuchtungseinrichtung, die eine Flüssigkeitsverdüsungseinrichtung (insbesondere Wasserverdüsungseinrichtung) aufweist und von einem zu befeuchtenden Luftstrom durchsetzt wird, wobei die Flüssigkeitsverdüsungseinrichtung mindestens eine Düsenbohrung aufweist, der Flüssigkeit unter Druck zugeführt wird, **dadurch gekennzeichnet**, daß die Düsenbohrung (10) direkt in ein flüssigkeitzuführendes Element (23) mittels Laserstrahlbearbeitung eingebracht angeordnet ist.

2. Luftbefeuchter nach Anspruch 1, **dadurch gekennzeichnet**, daß das flüssigkeitzuführende Element (23) ein Rohr (5) ist, dessen Rohrwandung (11) von der Düsenbohrung (10) durchsetzt ist.

3. Luftbefeuchter nach einem der vorhergehenden AnSprüche, **dadurch gekennzeichnet**, daß mehrere, mit Düsenbohrungen (10) versehene Rohre (5) vorgesehen sind.

4. Luftbefeuchter nach einem der vorhergehenden Ansprüche, **dadurch gekennzeichnet**, daß die Rohre (5) ein Rohrleitungsnetz (8) bilden.

5. Luftbefeuchter nach einem der vorhergehenden Ansprüche, **dadurch gekennzeichnet**, daß der Laserstrahl und/oder das Material des flüssigkeitzuführenden Elements (23) derart gewählt ist/sind, daß bei dem Herstellen der Düsenbohrung (10) deren Bohrungswandung (11) eine verschleißhemmende Oberfläche erhält.

6. Luftbefeuchter nach einem der vorhergehenden Ansprüche, **dadurch gekennzeichnet**, daß direkt an dem flüssigkeitzuführenden Element (23) eine Pralleinrichtung (12) für den aus der Düsenbohrung (10) austretenden Flüssigkeitsstrahl befestigt ist.

7. Luftbefeuchter nach einem der vorhergehenden AnSprüche, **dadurch gekennzeichnet**, daß die Pralleinrichtung (12) verstellbar befestigt ist.

8. Luftbefeuchter nach einem der vorhergehenden Ansprüche, **dadurch gekennzeichnet**, daß die Pralleinrichtung (12) auf das flüssigkeitzuführende Element (23), insbesondere auf das Rohr (5), aufgeklipst ist.

9. Luftbefeuchter nach einem der vorhergehenden Ansprüche, **dadurch gekennzeichnet**, daß die Pralleinrichtung (12) Klipsarme (14, 15) aufweist, die zumindest einen Teilumfang des Rohres (5) im Klemmsitz umgreifen.

10. Luftbefeuchter nach einem der vorhergehenden Ansprüche, **dadurch gekennzeichnet**, daß die Pralleinrichtung (12) aus einem vorzugsweise einstückigen Blechteil besteht.

11. Luftbefeuchter nach einem der vorhergehenden Ansprüche, **dadurch gekennzeichnet**, daß das Blechteil ein Stanz-Biege-Teil (13) ist.

12. Luftbefeuchter nach einem der vorhergehenden Ansprüche, **dadurch gekennzeichnet**, daß das flüssigkeitzuführende Element (23) aus Stahl, insbesondere Edelstahl, besteht.

13. Luftbefeuchter nach einem der vorhergehenden Ansprüche, **dadurch gekennzeichnet**, daß der Durchmesser der Düsenbohrung (10) im Bereich von 0,01 bis 0,3mm liegt, insbesondere 0,05mm beträgt.

14. Luftbefeuchter nach einem der vorhergehenden Ansprüche, **dadurch gekennzeichnet**, daß der Verdüsungsdruck Hochdruck, insbesondere mit 15 bis 300 bar, ist.
